(19) **Europäisches Patentamt**
**European Patent Office**
**Office européen des brevets**

(11) **EP 2 760 094 A1**

(12) **EUROPEAN PATENT APPLICATION**
published in accordance with Art. 153(4) EPC

(43) Date of publication:
**30.07.2014 Bulletin 2014/31**

(21) Application number: **12834036.1**

(22) Date of filing: **30.08.2012**

(51) Int Cl.:
*H02H 7/18* (2006.01)    *H01M 10/44* (2006.01)
*H02J 7/00* (2006.01)    *H02J 7/04* (2006.01)

(86) International application number:
**PCT/JP2012/071948**

(87) International publication number:
**WO 2013/042517 (28.03.2013 Gazette 2013/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.09.2011 JP 2011204490**

(71) Applicant: **Sanyo Electric Co., Ltd.**
**Osaka 570-8677 (JP)**

(72) Inventors:
• **YAMADA Yohei**
**Moriguchi City**
**Osaka 570-8677 (JP)**

• **NAKASHIMA Takeshi**
**Moriguchi City**
**Osaka 570-8677 (JP)**

(74) Representative: **Glawe, Delfs, Moll**
**Partnerschaft mbB von**
**Patent- und Rechtsanwälten**
**Postfach 26 01 62**
**80058 München (DE)**

(54) **SWITCH DEVICE AND BREAKER CONTROL METHOD**

(57)      A switching circuit (13) is provided with a charging switch (31) and a discharging switch (32). When the charging switch is turned ON, a battery module (21) is charged by electric power from an electric power supply (ACP, 16). When the discharging switch is turned ON, the power discharged from the battery module is output-ted to a load (LD). If there is abnormal heat buildup or some other anomaly in the battery module, a main control unit (11) immediately turns off a breaker unit (14) provid-ed between the switching circuit and the battery module. If the anomaly is noncritical, such as a communication anomaly, and does not immediately threaten the safety of the battery module, a grace period is set and the break-er unit is kept in the on-state until the grace period ends.

FIG. 1

EP 2 760 094 A1

**Description**

**FIELD OF THE INVENTION**

The present invention relates to a switching device and breaker control method.

**BACKGROUND OF THE INVENTION**

Various systems have been developed in which an electric power supply, load and secondary battery are connected via a switching circuit (see, for example, Patent Document 1). FIG. 12 is a schematic block diagram of a battery system of the prior art equipped with a battery unit 912. The battery unit 912 has a battery module 921 including one or more secondary batteries. The switching circuit 913 can be interposed between the electric power supply 915 and the battery module 921 to connect or disconnect the electric power supply 915 and the battery module 921 when instructed by the main control unit 911, or can be interposed between the battery module 921 and the load 916 to connect or disconnect the battery module 921 and the load 916 when instructed by the main control unit 911. When connected between the electric power supply 915 and the battery module 921, the battery module 921 is charged using power from the electric power supply 915. When connected between the battery module 921 and the load 916, the load 916 is supplied power that is discharged from the battery module 921.

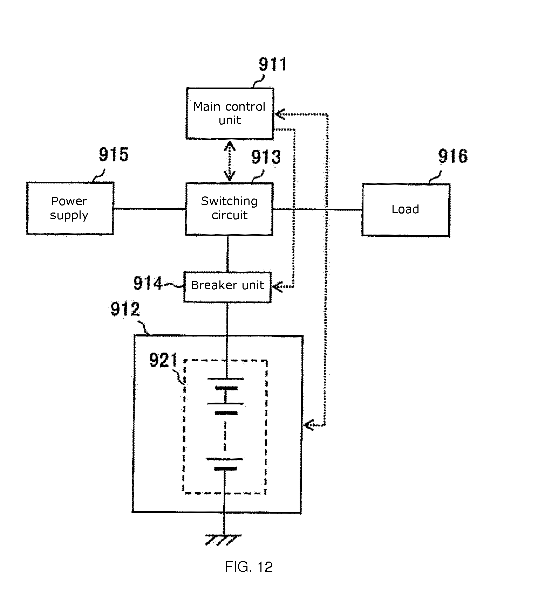

In the battery system shown in FIG. 12, the main control unit 911, the battery unit 912, and the switching circuit 913 are able to communicate. The battery unit 912 measures or calculates the voltage, current, temperature and remaining capacity of the battery module 921, and the battery unit 912 transmits the results of the measurements or calculations to the main control unit 911. The switching circuit 913 measures the voltage or current inside the switching circuit 913, and the switching circuit 913 transmits the results of the measurement to the main control unit 911.

A breaker unit 914 is provided between the switching circuit 913 and the battery module 921 to ensure the safety of the battery module 921 when any anomaly occurs in the battery system. In such a situation, main control unit 911 has the breaker unit 914 cut off the switching circuit 913 and the battery module 921 (that is, the control unit turns off the breaker unit 914). Many different types of anomaly occur in a battery system. However, protection of the battery module 921 is given precedence in battery systems of the prior art, and the breaker unit 914 is quickly turned OFF when an anomaly occurs, regardless of the type of anomaly.

After the breaker unit 914 has been turned OFF, the user of the battery system (for example, the occupant of a residence incorporating a battery system) could be allowed to turn the breaker unit 914 back ON according to his or her own judgment, but such an arrangement would not ensure the safety of the battery module 921. For example, the user of the battery system may decide heedlessly to turn back ON the breaker unit 914 after the breaker unit 914 was tripped due to abnormal overheating of the battery module 921. In such a case, the battery module 921 may be damaged. Therefore, most configurations only allow maintenance personnel with sufficient technical knowledge to turn a breaker unit 914 back ON after the breaker unit 914 has been tripped. However, maintenance personnel have to visit the site of the battery system when the breaker unit 914 has been turned OFF, and the battery system remains shut down until it can be restored.

Cited Documents

Patent Documents

Patent Document 1: Laid-Open Patent Publication No. 2003-111301A

**SUMMARY OF THE INVENTION**

Problem Solved by the Invention

The circuit breaking performed by a breaker unit 914 is a necessary function for ensuring the safety of the battery module 921. However, unnecessary circuit breaking operations may inconvenience users considering the fact that maintenance personnel have to visit the site to restore operation of the battery system. As a result, a technique is desired for ensuring safety while also suppressing the execution of the circuit breaking operation by the breaker unit 914 as much as possible.

The purpose of the present invention is to provide a switching device and breaker control method able to suppress the breaking of a circuit by a breaker unit.

Means of Solving the Problem

The present invention is a switching device including: a battery unit provided with a battery module having one or more secondary batteries; a switching circuit interposed between the battery module and an electrical power block outputting electrical power or receiving a supply of electrical power, and performing a switching operation to connect or disconnect the battery module and the electric power block; a breaker unit provided in series between the switching circuit and the battery module and/or between the switching circuit and the electric power block; and a control unit for controlling the switching operation of the switching circuit and the operation of the breaker unit; the switching device characterized in that the control unit: classifies an anomaly as a first or second anomaly based on the type of anomaly when an anomaly occurs in the switching device or battery unit and the affected circuits are blocked by the breaker unit and, when the anomaly occurring is a second anomaly, establishes a grace period corresponding to the remaining capacity or output voltage of the battery module, and has the breaker unit maintain a connection between the affected circuits during the grace period. Here, the control unit may have the breaker unit cut off the affected circuits without establishing a grace period when the occurring anomaly is a first anomaly.

The present invention is also a breaker control method used in a switching device including: a battery unit provided with a battery module having one or more secondary batteries; a switching circuit interposed between the battery module and an electrical power block outputting electrical power or receiving a supply of electrical power, and performing a switching operation to connect or disconnect the battery module and the electric power block; a breaker unit provided in series between the switching circuit and the battery module and/or between the switching circuit and the electric power block; and a control unit for controlling the switching operation of the switching circuit and the operation of the breaker unit;

the breaker control method characterized in that an anomaly is classified as a first or second anomaly based on the type of anomaly when an anomaly occurs in the switching device or battery unit and the affected circuits are blocked by the breaker unit and, when the anomaly occurring is a second anomaly, establishing a grace period corresponding to the remaining capacity or output voltage of the battery module, and having the breaker unit maintain a connection between the affected circuits during the grace period. The breaker control method may have the breaker unit cut off the affected circuits without establishing a grace period when the occurring anomaly is a first anomaly.

Effect of the Invention

The present invention is able to provide a switching device and breaker control method able to suppress the breaking of a circuit by a breaker unit.

**BRIEF DESCRIPTION OF THE DRAWINGS**

FIG. 1 is a schematic block diagram of the battery system in an embodiment of the present invention.
FIG. 2 is a diagram of battery module anomalies.
FIG. 3 is an internal block diagram of the switching circuit.
FIG. 4 is a diagram of switching circuit anomalies.
FIG. 5 is a diagram of battery system anomalies.
FIG. 6 is a flowchart of the operations performed in a first example of the present invention when a noncritical anomaly occurs.
FIG. 7 is a graph showing the relationship between the remaining capacity of the battery module and the length of the grace period in the first example of the present invention.
FIG. 8 is a flowchart of the operations performed in a second example of the present invention when a noncritical anomaly occurs.
FIG. 9 is a graph showing the relationship between the output voltage of the battery module and the length of the grace period in the second example of the present invention.
FIG. 10 is a diagram used to explain the method used to set the grace period in the sixth example of the present invention.
FIG. 11 is a schematic block diagram of the battery system in a modified embodiment of the present invention.
FIG. 12 is a schematic block diagram of the battery system in an example of the prior art.

**DETAILED DESCRIPTION OF THE INVENTION**

The following is a detailed explanation of examples of embodiments of the present invention. In each referenced drawing, identical components are denoted by the same reference symbols. As a general rule, redundant explanation of the same components has been eliminated. For the sake of simplicity, signs or symbols may be used with reference to information, physical quantities, states or members, and the names of the information, physical quantities, states or members referred to by the signs or symbols may be abbreviated or eliminated altogether.

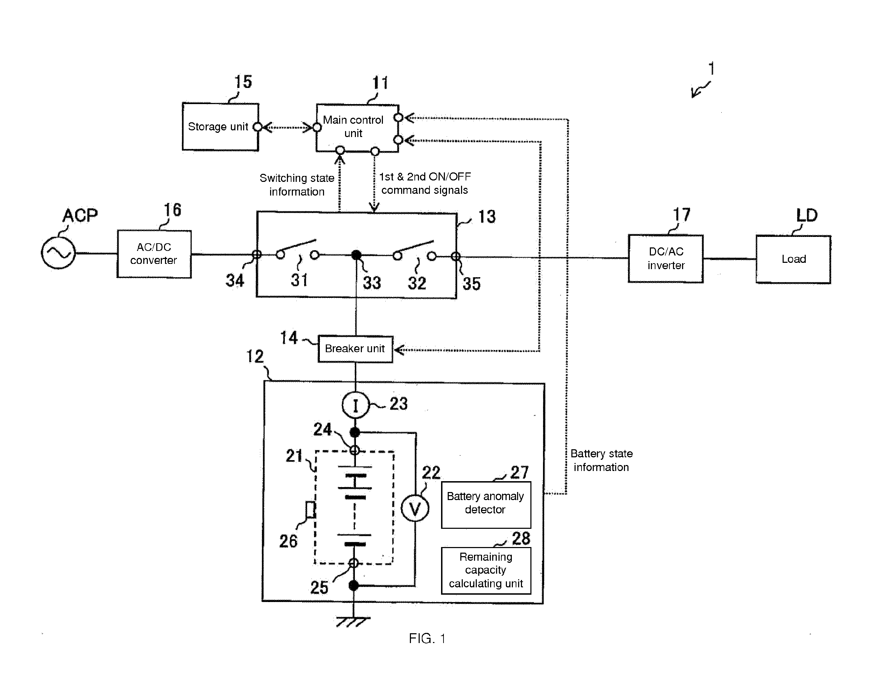

FIG. 1 is a schematic block diagram of the battery system 1 in an embodiment of the present invention. The battery system 1 includes some or all of the components shown in FIG. 1. For example, the battery system 1 can include each component referenced by numbers 11~14, and can include some or all of the components referenced by numbers 15~17.

The main control unit 11 includes a microcomputer, and has charge/discharge control of the battery unit 12, switching control of the switching circuit 13, and operational control of the breaker unit 14.

This battery unit 12 is equipped with a battery module 21 having one or more secondary batteries. The secondary batteries forming the battery module 21 can be any type of secondary battery, such as lithium ion batteries and nickel-hydrogen batteries. A single secondary battery may form the battery module 21. However, in the present embodiment, the battery module 21 includes a plurality of secondary batteries connected in series. Some or all of the secondary batteries in the battery module 21 may also be secondary batteries connected in parallel. Among the secondary batteries connected in parallel in the battery module 21, the positive electrode of the secondary battery located on the higher potential side is connected to the positive terminal 24, and the negative electrode of the secondary battery located on the lower potential side is connected to the negative terminal 25. The positive terminal 24 and the negative terminal 25 are connected to a single pair of output terminals on the battery unit 12, and the battery module 21 is charged and discharged via this single pair of output terminals. In the embodiments, charging and discharging refers to charging and discharging of the battery module 21 unless otherwise indicated.

A voltage measuring device 22, current measuring device 23, and temperature measuring device 26 are also provided in the battery unit 12. The voltage measuring device 22 measures the output voltage of the battery module 21, that is, the voltage between the positive terminal 24 and the negative terminal 25 with respect to the potential of the negative terminal 25. In the embodiments, the voltage, unless otherwise indicated, refers to the voltage as viewed from the potential of the negative terminal 25, which is the reference potential. The current measuring device 23 measures the current flowing via the positive terminal 24. The temperature measuring device 26 measures the temperature of the battery module 21 (for example, the surface temperature of the pack including a plurality of secondary batteries in the battery module 21, or the temperature at a predetermined location inside the battery module 21).

The main control unit 11 and the battery unit 12 are connected so that the main control unit 11 and the battery unit 12 can exchange information and signals. The connection between the main control unit 11 and the battery unit 12 can be wired or wireless. Communication between the main control unit 11 and the battery unit 12 includes the transmission of battery state information from the battery unit 12 to the main control unit 11, and the reception of battery state information by the main control unit 11. The battery state information includes voltage values measured by the voltage measuring device 22, current values measured by the current measuring device 23, and temperatures measured by the temperature measuring device 26.

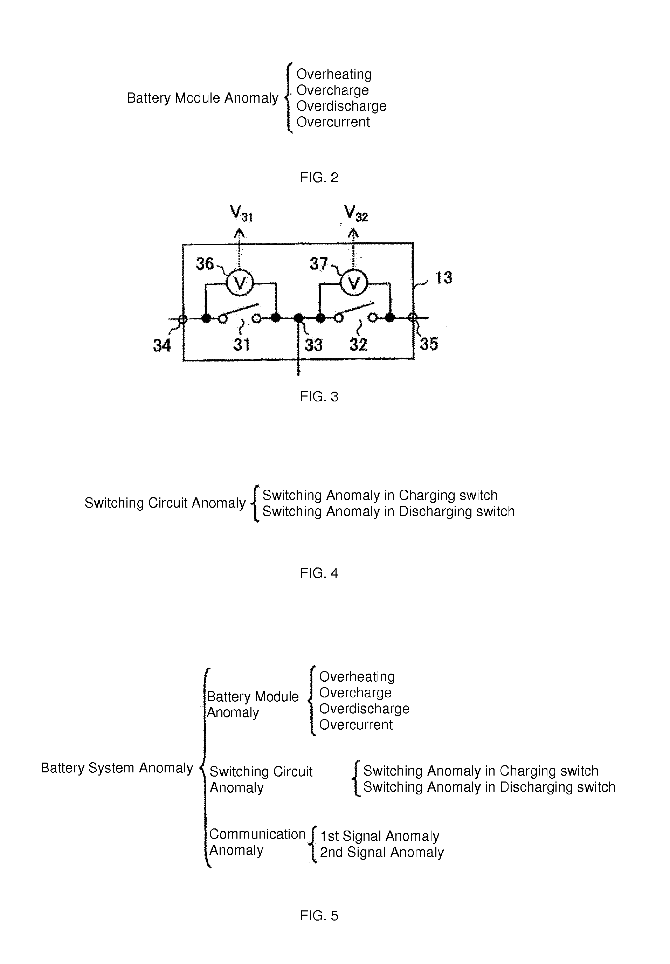

A battery anomaly detector 27 is also provided in the battery unit 12. The battery anomaly detector 27 determines whether or not an anomaly has occurred in the battery module 21 based on the voltage values measured by the voltage measuring device 22, current values measured by the current measuring device 23, and temperatures measured by the temperature measuring device 26. Anomalies of the battery module 21 detectable by the battery anomaly detector 27, as shown in FIG. 2, include overheating of the battery module 21 (that is, an anomaly in the temperature of the battery module 21), overcharging of the battery module 21 (that is, an anomaly caused by overcharging of the battery module 21), overdischarging of the battery module 21 (that is, an anomaly caused by overdischarging the battery module 21), and overcurrent in the battery module 21 (that is, an anomaly caused by an overcurrent in the battery module 21).

The battery anomaly detector 27 determines that overheating has occurred in the battery module 21 when the temperature measured by the temperature measuring device 26 exceeds a predetermined upper limit temperature, determines that overcharging of the battery module 21 has occurred when the voltage measured by the voltage measuring device 22 exceeds a predetermined upper limit voltage, determines that overdischarging of the battery module 21 has occurred when the voltage measured by the voltage measuring device 22 falls below a predetermined lower limit voltage, and determines that an overcurrent has occurred in the battery module 21 when the current measured by the current measuring device 23 exceeds a predetermined upper limit current. The battery state information includes information indicating whether or not the battery module 21 is in an overheated state, includes information indicating whether or not the battery module 21 is in an overcharged state, includes information indicating whether or not the battery module 21 is in an overdischarged state, and includes information indicating whether or not the battery module 21 is in an overcurrent state.

A remaining capacity calculating unit 28 is also provided in the battery unit 12. The remaining capacity calculating unit 28 calculates the remaining capacity of the battery module 21 using the current value measured by the current measuring device 23. The remaining capacity calculating unit 28 calculates the value of the remaining capacity in A·h (ampere-hour) or mA·h (milliampere-hour) units, but the state of charge (SOC) can also be calculated as the indicator of the remaining capacity. The SOC indicates the percentage of the actual remaining capacity of the battery module 21 relative to the charge capacity of the battery module 21 when the battery module 21 is fully charged. Therefore, the SOC is indicated as a percentage (%). The SOC is 100% when the battery module 21 is fully charged, and the SOC is 0% when discharge of the battery module 21 has ended. The discharge end state may be referred to as the fully discharged state.

The storage capacity of the battery module 21 when the battery module 21 has been fully charged, that is, the full charge state, actually changes as the battery module 21 deteriorates. Here, however, the fully charged capacity as determined by the remaining capacity calculating unit 28 is simply given. In other words, the fully charged capacity is normalized to 1 (the fully charged capacity is considered to be 1, and the remaining charge is subject to interpretation). As a result, the remaining capacity and SOC of the battery module 21 are the same value. The remaining capacity calculating unit 28 can accumulate the current values periodically measured by the current measuring device 23 when the battery module 21 is in a fully charged state or fully discharged state to calculate the remaining capacity from time to time. The calculated remaining capacity is included in the battery state information. Note that the battery anomaly detector 27 and the remaining capacity calculating unit 28 may be provided in the main control unit 11 instead of in the battery unit 12.

In the present specification, the fully charged state and fully discharged state are states particular to a battery module 21 and are established by the designer (including the applicant and inventor) of the battery system 1. When the battery module 21 has reached the fully charged state, it may be possible to safely charge the battery module 21 further. However, the designer may define this as the fully charged state in order to provide some margin against overcharging. Similarly, when the battery module 21 has reached the fully discharged state, it may be possible to safely discharge the battery module 21 further, but the designer may have defined this as the fully charged state in order to provide some margin against overdischarge.

The switching circuit 13 includes a charging switch 31 interposed in series between the AC/DC converter 16 and the battery unit 12 (and battery module 21), and a discharging switch 32 interposed in series between the DC/AC inverter 17 and the battery unit 12 (and battery module 21). Both the charging switch 31 and discharging switch 32 can be any type of semiconductor switching element or mechanical switching element. For example, the charging switch 31 and the discharging switch 32 can be formed using a metal-oxide semiconductor field-effect transistor (MOSFET) or an insulated gate bipolar transistor (IGBT). The charging switch 31 and the discharging switch 32 are connected in series between the input terminal 34 of the switching circuit 13 and the output terminal 35, and the connection point 33 is the connection point between the charging switch 31 and the discharging switch 32. The charging switch 31 is interposed between the input terminal 34 and the connection point 33, and the discharging switch 32 is interposed between the connection point 33 and the output terminal 35.

The main control unit 11 turns the charging switch 31 ON and OFF by outputting a first ON command signal or a first OFF command signal to the charging switch 31 as switching command signals. As explained below, when an anomaly has not occurred in the charging switch 31 and a first ON command signal has been transmitted to the charging switch 31, the charging switch 31 is turned ON. When a first OFF command signal has been transmitted to the charging switch 31, the charging switch 31 is turned OFF. When the charging switch 31 is turned ON, the input terminal 34 and the connection point 33 are connected. When the charging switch 31 is turned OFF, the input terminal 34 and connection point 33 are disconnected. The input terminal 34 is connected to the AC/DC converter 16, and the connection point 33 is connected to the battery module 21 via the breaker unit 14. Therefore, the charging switch 31 connects or disconnects the AC/DC converter 16 and the battery module 21 based on switching command signals from the main control unit 11.

The main control unit 11 turns the discharging switch 32 ON and OFF by outputting a second ON command signal or a second OFF command signal to the discharging switch 32 as switching command signals. As explained below, when an anomaly has not occurred in the discharging switch 32 and a second ON command signal has been transmitted to the discharging switch 32, the discharging switch 32 is turned ON. When a second OFF command signal has been transmitted to the discharging switch 32, the discharging switch 32 is turned OFF. When the discharging switch 32 is turned ON, the connection point 33 and the output terminal 35 are connected. When the discharging switch 32 is turned OFF, the connection point 33 and the output terminal 35 are disconnected. The output terminal 35 is connected to the DC/AC inverter 17, and the connection point 33 is connected to the battery module 21 via the breaker unit 14. Therefore, the discharging switch 32 connects or disconnects the DC/AC inverter 17 and the battery module 21 based on switching command signals from the main control unit 11.

The main control unit 11 and the switching circuit 13 are connected so that the main control unit 11 and the switching circuit 13 can exchange information and signals. The connection between the main control unit 11 and the switching circuit 13 can be wired or wireless. Communication between the main control unit 11 and the switching circuit 13 includes sending switching state information from the switching circuit 13 and the main control unit 11, and receiving switching state information from the main control unit 11. Communication between the main control unit 11 and the switching circuit 13 may also include sending switching command signals (first and second ON command signals and first and second OFF command signals) from the main control unit 11 to the switching circuit 13, and receiving switching command signals from the switching circuit 13.

As shown in FIG. 3, the switching circuit 13 includes a voltage measuring device 36 for measuring the voltage between both terminals of the charging switch 31, that is, between the input terminal 34 and the connection point 33, and for outputting signals expressing the measured voltage $V31$, and a voltage measuring device 37 for measuring the voltage between both terminals of the discharging switch 32, that is, between the connection point 33 and the output terminal 35, and for outputting signals expressing the measured voltage $V32$. The signals outputted from voltage measuring devices 36 and 37 are included in the switching state information. The switching circuit 13 also includes a current measuring device (not shown) for measuring the current in the switching circuit 13 (for example, the current flowing via the input terminal 34, the connection point 33 or the output terminal 35) and for outputting signals expressing the measured current. The signals outputted from the current measuring device can also be included in the switching state information.

As described above, the main control unit 11 controls the switching state of the switching circuit 13 (whether switch 31 and 32 are turned ON or OFF) by outputting switching command signals to the switching circuit 13. At this time, the main control unit 11 can detect an anomaly in the switching control based on signals outputted from voltage measuring devices 36 and 37 in the switching state information, that is, based on measured voltage values $V31$ and $V32$.

When the measured voltage value $V31$ is greater than a predetermined reference voltage value $TH31A$, the main control unit 11 assumes that the charging switch 31 has been turned OFF regardless of whether a first ON command signal has been outputted to the charging switch 31. Also, when the measured voltage value $V31$ is less than a predetermined reference voltage value $TH31B$, the main control unit 11 assumes that the charging switch 31 has been turned ON regardless of whether a first OFF command signal has been outputted to the charging switch 31. In this way, the main control unit 11 can determine whether a switching anomaly has occurred in the charging switch 31 ($TH31A > TH31B$). Similarly, when the measured voltage value $V32$ is greater than a predetermined reference voltage value $TH32A$, the main control unit 11 assumes that the discharging switch 32 has been turned OFF regardless of whether a second ON command signal has been outputted to the discharging switch 32. Also, when the measured voltage value $V32$ is less than a predetermined reference voltage value $TH32B$, the main control unit 11 assumes that the discharging switch 32 has been turned ON regardless of whether a second OFF command signal has been outputted to the discharging switch 32. In this way, the main control unit 11 can determine whether a switching anomaly has occurred in the discharging switch 32 ($TH32A > TH32B$). Switching anomalies in switch 31 and switch 32 belong to anomalies of the switching circuit 13 (that is, switching control anomalies of the switching circuit 13) (see FIG. 4).

The breaker unit 14 is a self-control protector (SCP), mechanical relay or fuse interposed in series between the battery module 21 and the switching circuit 13. This is turned OFF when necessary. When the breaker unit 14 is turned ON, the battery module 21 and the switching circuit 13 are connected. When the breaker unit 14 is turned OFF, the battery module 21 and the switching circuit 13 are disconnected. More specifically, because the positive terminal 24 and the connection point 33 are connected via the breaker unit 14, the positive terminal 24 and the connection point 33 are connected when the breaker unit 14 is turned ON, and the positive terminal 24 and the connection point 33 are disconnected when the breaker unit 14 is turned OFF.

The breaker unit 14 is turned ON as a general rule. In the present embodiment, the breaker unit 14 should be assumed to be turned ON unless otherwise indicated. If necessary, the main control unit 11 can output a breaker OFF command signal to the breaker unit 14. When the breaker unit 14 receives a breaker OFF command signal, it immediately shuts OFF, and the battery module 21 and the switching circuit 13 are cut off from each other. The breaker unit 14 can transmit a signal to the main control unit 11 indicating whether it is ON or OFF.

The battery system 1 can be configured so that the user of the battery system 1 (for example, the occupant of a residence incorporating a battery system 1) is able to turn the breaker unit 14 back ON after the breaker unit 14 has been turned OFF. However, in the present embodiment, it is assumed that the user of the battery system 1 cannot turn the breaker unit 14 back ON. Once the breaker unit 14 has been turned OFF, only maintenance personnel with specialized technical knowledge can turn the breaker unit 14 back ON. In other words, once the breaker unit 14 has been turned OFF, the maintenance personnel has to visit the site of the battery system 1, and the battery system 1 remains shut down until it has been restored.

The storage unit 15 is memory composed of semiconductor memory or a magnetic disk. The main control unit 11 can store any information in the storage unit 15, and any information stored in the storage unit 15 can be read on any timing. The main control unit 11 can periodically acquire battery state information by communicating with the battery unit 12, periodically acquire switching state information by communicating with the switching circuit 13, and store the battery state information and the switching state information in the storage unit 15 whenever necessary. The storage unit 15 may be connected to the main control unit 11 via a communication network such as the internet.

The alternating current power supply ACP can be a commercial power supply, and outputs alternating current voltage at a predetermined frequency and voltage. The AC/DC converter 16 converts the alternating current voltage from the alternating current power supply ACP and outputs the converted power. The output terminal of the AC/DC converter 16 receiving the direct current voltage is connected to the input terminal 34 of the switching circuit 13. When both the charging switch 31 and the breaker unit 14 are turned ON, the direct current voltage from the AC/DC converter 16 is applied to the connection point 33 via the input terminal 34 and the charging switch 31, and the battery module 21 can be charged by the direct current power from the AC/DC converter 16. When the breaker unit 14 is assumed to be turned ON, the charging switch 31 is turned ON, and the discharging switch 32 is turned ON, the direct current voltage discharged from the battery module 21 is applied to the output terminal 35 via the discharging switch 32. The charging switch 31 and the discharging switch 32 can be turned ON simultaneously. When the breaker unit 14, the charging switch 31 and the discharging switch 32 are all turned ON, depending on the output voltage of the battery module 21, direct current voltage synthesized from the direct current voltage discharged by the battery module 21 and from the direct current voltage of the AC/DC converter 16 is applied to the output terminal 35 (the discharge from the battery module 21 depending on the output voltage of the battery module 21).

The input terminal of the DC/AC inverter 17 is connected to the output terminal 35 of the switching circuit 13. The DC/AC inverter 17 converts the direct current voltage applied to the output terminal 35 to alternating current voltage, and supplies the resulting alternating current voltage to the load LD.

The output terminal 35 can be connected to a direct current load which operates on direct current power (not shown) instead of to the DC/AC inverter 17 and the load LD or in addition to the DC/AC inverter 17 and the load LD. Also, the input terminal 34 can be connected to a direct current power supply which outputs direct current power (not shown; for example, a solar cell) instead of to the alternating current power supply ACP and the AC/DC converter 16 or in addition to the alternating current power supply ACP and the AC/DC converter 16.

However, as shown in FIG. 5, anomalies that may occur in the battery system 1 (or anomalies that may occur outside but affect the battery system 1) include communication anomalies in addition to anomalies in the battery module 21 (see FIG. 2) and anomalies in the switching circuit 13 (see FIG. 4). Communication anomalies include communication anomalies between the main control unit 11 and the battery unit 12 (referred to as first communication anomalies below) and communication anomalies between the main control unit 11 and the switching circuit 13 (referred to as second communication anomalies below). When a first communication anomaly occurs, some or all of the battery state information is not transmitted to the main control unit 11. When a second communication anomaly occurs, some or all of the switching state information is not transmitted to the main control unit 11. Conversely, when the main control unit 11 has not transmitted some or all of the battery state information, it can determine that a first communication anomaly has occurred, and when the main control unit 11 has not transmitted some or all of the switching state information, it can determine that a second communication anomaly has occurred. In addition, the main control unit 11 can recognize whether an anomaly has occurred in the battery module 21 from the results detected by the battery state detector 27, and can recognize whether an anomaly has occurred in the switching circuit 13 using the method described above.

When an anomaly has occurred in the battery system 1, the main control unit 11 classifies the anomaly that has occurred as either a critical anomaly or noncritical anomaly on the basis of the type of anomaly that has occurred. An anomaly classifying unit (not shown) which classifies anomalies can be incorporated into the main control unit 11.

When a critical anomaly has occurred, the main control unit 11 immediately outputs a breaker OFF command signal to the breaker unit 14 without establishing a grace period as described below. In response, the connection between the battery module 21 and the switching circuit 13 is immediately cut off (that is, the connection between the battery module 21 and the switching circuit 13 is immediately cut off by the breaker unit 14). Anomalies that are classified as critical anomalies include at least one anomaly among overheating, overcharging, overdischarging and overcurrent of the battery module 21. Safety is assured by prompt circuit breaking when a critical anomaly has occurred.

When a noncritical anomaly has occurred, the main control unit 11 establishes a grace period beginning at the time the anomaly occurred, and the connection between the battery module 21 and the switching circuit 13 is maintained by the breaker unit 14 during the grace period. If the noncritical anomaly has not been resolved by the time the grace period ends, the main control unit 11 outputs a breaker OFF command signal to the breaker unit 14. In response, the breaker unit 14 cuts off the connection between the battery module 21 and the switching circuit 13. If the noncritical anomaly is resolved before the grace period ends, operation of the battery system 1 returns to normal operation as performed prior to the occurrence of the anomaly. During normal operation, the breaker unit 14 always remains turned ON. The first and second communication anomalies can be classified as noncritical anomalies. Switching anomalies that occur in the charging switch 31 and discharging switch 32 may also be classified as noncritical anomalies.

The following is an explanation with reference to the first through tenth examples of the operations performed by the battery system 1, and the items related to these operations, when a noncritical anomaly has occurred. The first through tenth examples can be combined with each other except where otherwise indicated.

1st Example

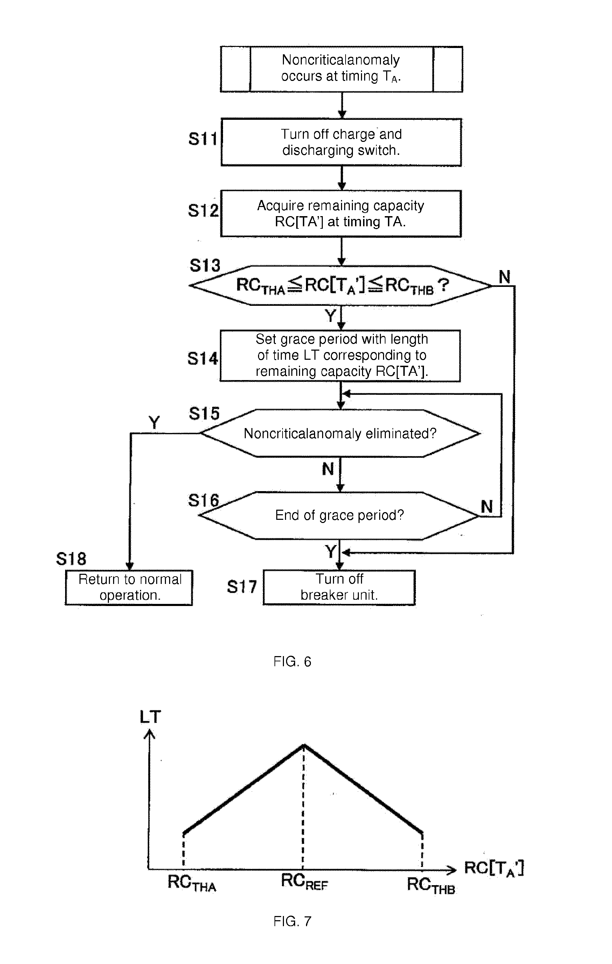

The following is an explanation of the first example. FIG. 6 is a flowchart of the operations performed by the battery system 1 in the first example when a noncritical anomaly occurs. In the first example, it is assumed that a noncritical anomaly has occurred and the main control unit 11 has recognized that a noncritical anomaly has occurred at timing TA during normal operation of the battery system 1.

When the main control unit 11 recognizes that a noncritical anomaly has occurred, it first, in Step S11, outputs first and second OFF command signals to turn OFF both the charging switch 31 and the discharging switch 32. Output of the first and second OFF command signals continues even during the grace period described below.

In Step S12 following Step S11, the main control unit 11 acquires the remaining capacity of the battery module 21 at timing TA'. The remaining capacity of the battery module 21 at timing TA' is represented by the symbol RC[TA']. Timing TA' is a timing that references timing TA, and can be a small predetermined period of time prior to timing (TA-Δ) or a small predetermined period of time after timing (TA+Δ). Timing TA' may also match timing TA. The remaining capacity described below is the remaining capacity of the battery module 21 unless otherwise indicated.

For example, in Step S12, the main control unit 11 retrieves the remaining capacity at timing (TA-Δ) immediately prior to timing TA from the storage unit 15 as RC[TA']. When a first communication anomaly has not occurred, the main control unit 11 may acquire the remaining capacity at timing (TA+Δ) immediately after timing TA from the battery unit 12 as remaining capacity RC[TA'].

In Step S13, after acquiring the remaining capacity RC[TA'], the main control unit 11 determines whether or not Equation (1) below has been satisfied. In Equation (1), either one of the two inequality signs "≤" may be replaced by inequality sign "<". A lower limit value RCTHA and an upper limit value RCTHB are established beforehand inside the range satisfying the equation "0 < RCTHA < RCTHB < 1" (for example, RCTHA = 0.1, RCTHB = 0.9). As mentioned above, the full charge capacity has been normalized to 1.

$$\text{RCTHA} \le \text{RC[TA']} \le \text{RCTHB} \ldots (1)$$

When Equation (1) in Step S13 is not satisfied, that is, when the remaining capacity RC[TA'] is outside of a predetermined capacity range, the main control unit 11 immediately outputs a breaker OFF command signal to the breaker unit 14, and the breaker unit 14 turns OFF (Step S17). When Equation (1) is satisfied, the main control unit 11 is allowed to move from Step S 13 to Step S 14, and the processing continues at Step S 14 and in subsequent steps. In Step S 14, the main control unit 11 establishes a grace period with length of time LT according to the remaining capacity RC[TA']. The start time for the grace period is timing TA or timing TA'. FIG. 7 is a graph showing the relationship between the remaining capacity RC[TA'] and the length of time LT. When the RC[TA'] matches a predetermined reference capacity RCREF, the length of time LT is the maximum period of time. As the absolute value of the difference |RC[TA']-RCREF| increases, the length of time LT becomes shorter than the maximum time. Here, "RCTHA < RCREF < RCTHB".

After the grace period has been established in Step S 14, the main control unit 11 in Step S 15 and Step S16 monitors to determine whether the noncritical anomaly has been resolved while also using a timer (not shown) to determine whether the grace period has ended. When the noncritical anomaly is a first communication anomaly, the main control unit 11 determines that the noncritical anomaly has been resolved if reception of battery state information has been restored. When the noncritical anomaly is a second communication anomaly, the main control unit 11 determines that the noncritical anomaly has been resolved if reception of switching state information has been restored. When the noncritical anomaly is a switching anomaly related to switch 31 or switch 32, the main control unit 11 can determined whether the switching anomaly related to switch 31 or switch 32 has been resolved based on the measured voltage value V31 or V32 (see FIG. 3).

When the noncritical anomaly has been resolved by the time the grace period has ended (Y in Step S 15), the operation of the battery system 1 returns to normal operations (Step S 18). When the grace period has ended before the non-critical anomaly has been resolved (Y in Step S16), the main control unit 11 in Step S 17 outputs the breaker OFF command signal to the breaker unit 14, and the breaker unit 14 is turned OFF.

A noncritical anomaly does not immediately threaten the safety of a battery module 21 when it occurs, or can be resolved over time, such as the temporary effect of noise in causing a communication anomaly. When an anomaly is a noncritical anomaly, establishing a grace period before turning OFF the breaker unit 14 and waiting for a resolution of the anomaly, as described above, reduces user inconvenience. When the anomaly is a noncritical anomaly, safety can be assured without immediately turning OFF the breaker unit 14. If the noncritical anomaly is self-correcting, maintenance personnel do not have to be called. However, the safety of the battery module 21 is given precedence. When a noncritical anomaly has occurred, first and second OFF command signals are outputted to the charging switch 31 and the discharging switch 32 (Step S11).

However, depending on the type of anomaly that has occurred, there is a possibility that either one of switches 31 and 32 may remain turned ON even when first and second OFF command signals have been outputted by the main control unit 11. When the charging switch 31 remains turned ON, the battery module 21 reaches the fully charged state and then becomes overcharged. When the discharging switch 32 remains turned ON, the battery module 21 reaches the fully discharged state and then becomes overdischarged. The length of time before overcharging occurs is shorter when the remaining capacity RC[TA'] is higher, and the length of time before overdischarging occurs is shorter when the remaining RC[TA'] is lower. Because overcharging and overdischarging are both extremes to be avoided, the avoidance of both has to be taken into account. Therefore, as explained with reference to FIG. 7, the length of time LT of the grace period is established. For example, the reference capacity RCREF is set to 0.5 in order to equally avoid both overcharging and overdischarging. However, the reference capacity RCREF may also be set to a value other than 0.5.

When Equation (1) in Step S13 is not satisfied, the main control unit 11 immediately outputs a breaker OFF command signal to the breaker unit 14 without establishing a grace period, and the breaker unit 14 is immediately turned OFF (Step S17). When Equation (1) is not satisfied, there is a possibility that the battery module 21 will become overcharged or overdischarged in a relatively short period of time. Therefore, when Equation (1) is not satisfied, safety is given precedence and the breaker unit 14 is immediately turned OFF. Setting a grace period with a length of time LT of zero is equivalent to not establishing a grace period.

2nd Example

The following is an explanation of the second example. In the second example, a portion of the first example has been modified. The description of the first example can be applied to the second example for items with are not described below with reference to the second example.

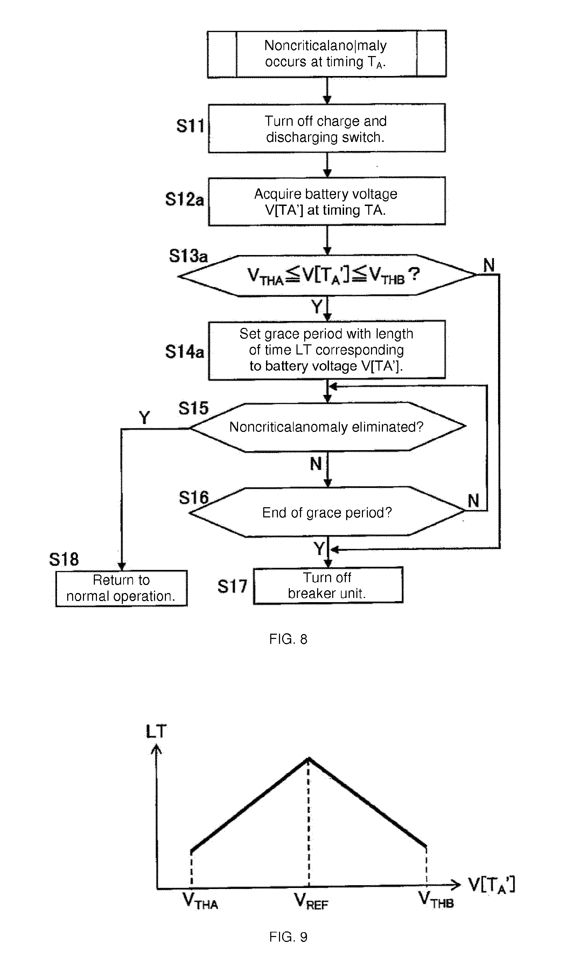

Because the output voltage of the battery module 21 increases as the remaining capacity increases, the processing in the first example can be performed in the second example except that the output voltage of the battery module 21 is used instead of the remaining capacity. Therefore, the operations and effects are the same as those in the first example. In other words, the flowchart in FIG. 6 can be replaced by the flowchart in FIG. 8. FIG. 8 is a flowchart of the operations performed by the battery system 1 in the second example. Here, it is assumed that a noncritical anomaly has occurred and the main control unit 11 has recognized that a noncritical anomaly has occurred at timing TA during normal operation of the battery system 1.

As in the first example, when the main control unit 11 recognizes that a noncritical anomaly has occurred, it first, in Step S11, outputs first and second OFF command signals to turn OFF both the charging switch 31 and the discharging switch 32. Output of the first and second OFF command signals continues even during the grace period described below.

In Step S12a following Step S11, the main control unit 11 acquires the remaining output voltage of the battery module 21 at timing TA'. The remaining output voltage of the battery module 21 at timing TA' is represented by the symbol V[TA']. For example, in Step S12a, the main control unit 11 retrieves the voltage value measured by the voltage measuring device 22 at timing (TA-$\Delta$) immediately prior to timing TA from the storage unit 15 as the battery voltage value V[TA']. When a first communication anomaly has not occurred, the main control unit 11 may acquire via communication the voltage value measured by the voltage measuring device 22 at timing (TA) or the voltage value measured by the voltage measuring device 22 at timing (TA+$\Delta$) immediately after timing TA from the battery unit 12 as battery voltage V[TA']. Even when a first communication anomaly has not occurred, a voltage measuring device (not shown) for measuring the voltage at the connection point 33 may be provided in the switching circuit 13. When the voltage V33 measured by this voltage measuring device is included in the switching state information and transmitted to the main control unit 11, the voltage value V33 at timing TA, (TA-$\Delta$) or (TA+$\Delta$) can be acquired as battery voltage value V[TA'].

In Step S13a, after acquiring the battery voltage V[TA'], the main control unit 11 determines whether or not Equation (2) below has been satisfied. In Equation (2), either one of the two inequality signs "$\leq$" may be replaced by inequality sign "<". The lower limit value VTHA is greater than the upper limit value VTHB. The lower limit value VTHA and the upper limit value VTHB are established beforehand based on the discharge stop voltage and the full charge voltage of the battery module 21.

$$VTHA \leq V[TA'] \leq VTHB \ldots (2)$$

When Equation (2) in Step S13a is not satisfied, that is, when the battery voltage V[TA'] is outside of a predetermined voltage range, the main control unit 11 immediately outputs a breaker OFF command signal to the breaker unit 14 without establishing a grace period, and the breaker unit 14 turns OFF (Step S 17). When Equation (2) is satisfied, the main control unit 11 is allowed to move from Step S 13a to Step S 14a, and the processing continues at Step S 14a and in subsequent steps. In Step S 14a, the main control unit 11 establishes a grace period with length of time LT according to the battery voltage V[TA']. FIG. 9 is a graph showing the relationship between the battery voltage V[TA'] and the length of time LT. When the V[TA'] matches a predetermined reference voltage VREF, the length of time LT is the maximum period of time. As the absolute value of the difference |V[TA']-RCREF| increases, the length of time LT becomes shorter than the maximum time. Here, "VTHA < VREF < VTHB".

After the grace period has been established in Step S 14a, the main control unit 11 in Step S 15 and Step S16 monitors to determine whether the noncritical anomaly has been resolved while also using a timer (not shown) to determine whether the grace period has ended. When the noncritical anomaly has been resolved by the time the grace period has ended (Y in Step S 15), the operation of the battery system 1 returns to normal operations (Step S 18). When the grace period has ended before the non-critical anomaly has been resolved (Y in Step S16), the main control unit 11 in Step S 17 outputs the breaker OFF command signal to the breaker unit 14, and the breaker unit 14 is turned OFF.

3rd Example

The following is an explanation of the third example. The third example is a modification based on the first or second example. When safety of the battery module 21 is given precedence, the charging switch 31 and discharging switch 32 are preferably turned OFF as soon as a noncritical anomaly occurs (see Step S11), but these switches to not have to be turned OFF. More specifically, when the current level during charging or discharge of the battery module 21 is fixed or essentially fixed, the need to immediately turn OFF the charging switch 31 and discharging switch 32 is eliminated. With this in mind, the process in Step S12 and subsequent to Step S12 can be performed when a noncritical anomaly has occurred without performing the process in Step S11 (output of the first and second OFF command signals) in the first or second examples. A current level during charging or discharging of the battery module 21 refers to a current value below a predetermined value during charging or discharging of the battery module 21.

4th Example

The following is an explanation of the fourth example. The fourth example is a modification based on the first or second example.

In the first example, when the charging switch 31 is turned ON, the discharging switch 32 is turned OFF, and a noncritical anomaly occurs, depending on the type of noncritical anomaly, the process in Step S 11 is optionally not performed, the charging switch 31 is kept ON, the discharging switch 32 is kept OFF, and the process in Step S12 and subsequent to Step S12 is performed as described in the first example. At this time, when Equation (1a) below is used instead of Equation (1) in the first example, RCTHB is used as the reference capacity, and the length of time LT may be extended as the remaining capacity RC[TA'] becomes smaller in view of the reference capacity RCTHB (for the sake of convenience, extending the length of time LT as the remaining capacity RC[TA'] becomes smaller in view of the reference capacity RCTHB is referred to below as method $\alpha1$). This is because, as the remaining capacity RC[TA'] becomes lower, the margin until overcharging is reached is large.

$$RC[TA'] \leq RCTHB \ldots(1a)$$

In the first example, when the charging switch 31 is turned OFF, the discharging switch 32 is turned ON, and a noncritical anomaly occurs, depending on the type of noncritical anomaly, the process in Step S 11 is optionally not performed, the charging switch 31 is kept OFF, the discharging switch 32 is kept ON, and the process in Step S12 and subsequent to Step S12 is performed as described in the first example. At this time, when Equation (1b) below is used instead of Equation (1) in the first example, RCTHA is used as the reference capacity, and the length of time LT may be extended as the remaining capacity RC[TA'] becomes larger in view of the reference capacity RCTHA (for the sake of convenience, extending the length of time LT as the remaining capacity RC[TA'] becomes larger in view of the reference capacity RCTHA is referred to below as method $\alpha2$). This is because, as the remaining capacity RC[TA'] becomes greater, the margin until overdischarging is reached is large.

$$RCTHA \leq RC[TA'] \ldots (1b)$$

In the second example, when the charging switch 31 is turned ON, the discharging switch 32 is turned OFF, and a noncritical anomaly occurs, depending on the type of noncritical anomaly, the process in Step S 11 is optionally not performed, the charging switch 31 is kept ON, the discharging switch 32 is kept OFF, and the process in Step S12a and subsequent to Step S12a is performed as described in the second example. At this time, when Equation (2a) below is used instead of Equation (2) in the second example, VTHB is used as the reference voltage, and the length of time LT may be extended as the voltage V[TA'] becomes lower in view of the reference voltage VTHB (for the sake of convenience, extending the length of time LT as the battery voltage V[TA'] becomes lower in view of the reference voltage VTHB is referred to below as method α3). This is because, as the voltage V[TA'] becomes lower, the margin until overcharging is reached is large.

$$V[TA'] \leq VTHB \dots (2a)$$

In the second example, when the charging switch 31 is turned OFF, the discharging switch 32 is turned ON, and a noncritical anomaly occurs, depending on the type of noncritical anomaly, the process in Step S 11 is optionally not performed, the charging switch 31 is kept OFF, the discharging switch 32 is kept ON, and the process in Step S12a and subsequent to Step S12a is performed as described in the second example. At this time, when Equation (2b) below is used instead of Equation (2) in the second example, VTHA is used as the reference voltage, and the length of time LT may be extended as the voltage V[TA'] becomes higher in view of the reference voltage VTHA (for the sake of convenience, extending the length of time LT as the battery voltage V[TA'] becomes higher in view of the reference voltage VTHA is referred to below as method α4). This is because, as the voltage V[TA'] becomes lower, the margin until overdischarging is reached is large.

$$VTHA \leq V[TA'] \dots (2b)$$

In the explanation of the fourth example, it is assumed that the charging switch 31 remains turned ON and the discharging switch 32 remains turned OFF or the charging switch 31 remains turned OFF and the discharging switch 32 remains turned ON after a noncritical anomaly has occurred. However, the charge and discharge states may change during the grace period, and the optimum length of the grace period may change when switching occurs. Therefore, once a grace period has been established, the grace period should be re-established after each change in the charge and discharge states. Changes to the charge and discharge states include changing from charging the battery module 21 to discharging the battery module 21, and changing from discharging the battery module 21 to charging the battery module 21. Preferably, the grace period is not extended without limit each time a change occurs as this is equivalent to accepting unlimited operation regardless of whether a noncritical anomaly has occurred. As a result, a fixed limit should be placed on the re-establishment of the grace period. For example, a limit can be placed on the re-establishment of the grace period so that the end time of a re-established grace period does not exceed the end time of the grace period established the first time.

5th Example

The following is an explanation of the fifth example. The fifth example is a modification based on the first or second example. In the fifth example, any one of methods α1-α4 described above can be used.

Under situations in which the type of noncritical anomaly is fairly clear and there is hardly any risk of overcharging, avoiding overdischarging becomes the most important consideration. For example, it may be clear that an anomaly has occurred in the discharging switch 32 but that the charging switch 31 is operating normally, or that a first communication anomaly (a communication anomaly between the main control unit 11 and the battery unit 12) has occurred in the discharge mode during which the battery module 21 is not being charged.

Conversely, under situations in which the type of noncritical anomaly is fairly clear and there is hardly any risk of overdischarging, avoiding overcharging becomes the most important consideration. For example, it may be clear that an anomaly has occurred in the charging switch 31 but that the discharging switch 32 is operating normally, or that a first communication anomaly (a communication anomaly has occurred between the main control unit 11 and the battery unit 12) during the charging mode when the battery module 21 is not being discharged.

Therefore, when the type of noncritical anomaly is fairly clear, it is advantageous to establish a reference capacity or reference voltage that focuses either on charging or discharging among methods α1-α4.

When a noncritical anomaly has occurred and the type of noncritical anomaly is fairly clear, the length of time LT can be established using method α1 or α2 based on the type of noncritical anomaly, or the length of time LT can be established using method α3 or α4 based on the type of noncritical anomaly. At this time, the processing in Step S12 and the processing subsequent to Step S12 can be performed without performing the processing in Step S11 (outputting the first and second OFF command signals), and the examples of the specific operations performed accordingly are shown in the fourth example.

When a sudden state change occurs, it is preferably and safer to perform the processing in Step S 11. When Step S 11 is performed in the fifth example, whether or not to use methods α1-α4 depends on the differences between the fifth example and the first or second example. However, the fifth example allows for a longer grace period because the use of methods α1~α4 takes into account either overcharging or overdischarging in the establishment of the length of time LT for the grace period.

6th Example

The following is an explanation of the sixth example. When a nonfatal anomaly occurs and the charging switch 31 or discharging switch 32 is not immediately turned OFF, a two-stage grace period can be established.

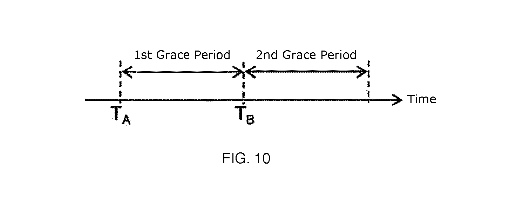

For example, as shown in FIG. 10, when a noncritical anomaly occurs at timing TA, the main control unit 11 establishes a grace period in accordance with the grace period setting methods described in the first, second or fourth examples, and the grace period set at this time is treated as the first grace period. The first grace period starts at timing TA. Timing TB is the timing after the length of time of the first grace period from timing TA. The main control unit 11 does not prevent the turning OFF of the charging switch 31 or discharging switch 32 over the course of normal operation during the first grace period.

When the noncritical anomaly has been solved before the first grace period ends, the battery system 1 returns to normal operation. When the noncritical anomaly has not been solved before the first grace period ends, the main control unit 11 sets another grace period in accordance with the grace period setting methods described in the first, second or fourth examples. The re-established grace period is called the second grace period. During the second grace period, the main control unit 11 prevents the charging switch 31 or the discharging switch 32 from being turned ON. In other words, during the second grace period, the main control unit 11 continuously outputs first and second OFF control signals to the charging switch 31 and the discharging switch 32.

When the noncritical anomaly has been solved before the second grace period ends, the battery system 1 returns to normal operation. When the noncritical anomaly has not been solved before the second grace period ends, the main control unit 11 outputs a breaker OFF control signal to the breaker unit 14, and the breaker unit 14 is turned OFF.

The length of time of the first grace period is established so that there is hardly any risk of overcharging or overdischarging during the first grace period even when the charging switch 31 or discharging switch 32 is turned ON. As a result, the charging switch 31 or discharging switch 32 is allowed to be turned ON during the first grace period. As a result, the user can safely continue to use the battery system 1 during the first grace period without being aware of the noncritical anomaly. Because it is assumed that the risk of overcharging or overdischarging rises when the first grace period ends, the main control unit 11 gives precedence to safety and turns OFF the charging switch 31 and discharging switch 32 during the second grace period after the end of the first grace period.

8th Example

The following is an explanation of the eighth example. After the grace period has been established using any of the methods described above, the main control unit 11 may turn OFF the breaker unit 14 before the end of the grace period depending on the circumstances. For example, during the grace period, the remaining capacity or output voltage of the battery module 21 is monitored. If the remaining capacity at timing TC before the end of the grace period falls below the lower limit value RCTHA or rises above the upper limit value RCTHB, or if the output voltage at timing TC before the end of the grace period falls below the lower limit value VTHA or rises above the upper limit value VTHB, the main control unit 11 may turn OFF the breaker unit 14 at timing TC without waiting until the end of the grace period.

Also, when it has been determined after the establishment of the grace period that the risk of overcharging or overdischarging has diminished based on the remaining capacity or output voltage of the battery module 21, the main control unit 11 may extend the established grace period.

Even when the remaining capacity or output voltage of the battery module 21 has not been acquired directly due to the occurrence of a first communication anomaly (a communication anomaly between the main control unit 11 and the battery unit 12), the current flowing to the switching circuit 13, the power consumed by the load LD, or the amount of power generated by a solar cell which can be used instead of the alternating current power supply ACP and the AC/DC converter 16 may be monitored in the battery system 1. In this situation, the current, consumed power or amount of power generated is used to estimate the remaining capacity or output voltage of the battery module 21 during the grace period, and each process (including each process described in the eighth example) may be realized based on the estimated remaining capacity or output voltage.

9th Example

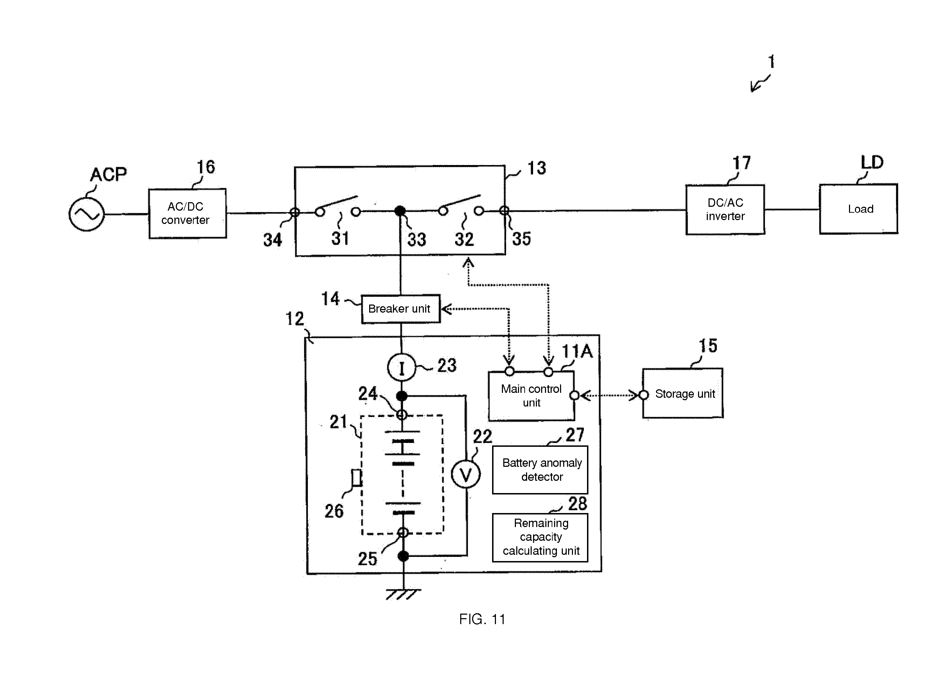

The following is an explanation of the ninth example. In the battery system shown in FIG. 1, the main control unit 11 is provided outside of the battery unit 12. However, the main control unit 11 may also be installed inside the battery unit 12. For example, as shown in FIG. 11, a main control unit 11A having the same functions as the main control unit 11 may be provided inside the battery unit 12, and the main control unit 11A may control the switching circuit 13 and the breaker unit 14. The control unit in the battery unit 12 and the control unit outside of the battery unit 12 may work together to realize the functions of the main control unit 11 described above.

10th Example

The following is an explanation of the tenth example. In the examples described above, the breaker unit 14 is connected in series to the switching circuit 13 and the battery unit 12 (battery module 21). However, a first breaker unit provided in series (connected in series) between the switching circuit 13 and the battery unit 12 (battery module 21), a second breaker unit provided in series (connected in series) between the switching circuit 13 and the AC/DC converter 16, and a third breaker unit provided in series (connected in series) between the switching circuit 13 and the DC/AC inverter 17 may be provided in the battery system 1. One or two breaker units may also be provided in the battery system 1 within the first through third breaker units. The first breaker unit is exactly the same as the breaker unit 14 described above, and the second and third breaker units are similar to the breaker unit 14 described above.

The main control unit 11 controls the first through third breaker units to connect or disconnect the first and second affected circuits. The first circuit affected by the first through third breaker units is a circuit including the switching circuit 13. The second circuits affected by the first, second and third breaker units is a circuit including the battery module 21, a circuit including the AC/DC converter 16, and a circuit including the DC/AC inverter 17. In the case of the ith breaker unit, when the ith breaker unit is turned ON, the first and second affected circuits are connected. When the ith breaker unit is turned OFF, the first and second affected circuits are disconnected. (Here, i is an integer). The control method used by the main control unit 11 to turn ON and OFF the ith breaker unit (including the grace period setting method) can be any control method used above by the main control unit 11 to turn ON and OFF the breaker unit 14.

Variations

Several variations of the embodiments of the present invention are possible without departing from the technical scope of the claims. The embodiments described above are examples of embodiments of the present invention, and the meanings of the terms for each configurational requirement of the present invention are not restricted to the descriptions in the embodiments above. Specific numerical values in the text of the descriptions are merely for illustrative purposes, and these can be changed to any other numerical value. Annotations applicable to the embodiments described above are included below in Note 1 through Note 3. The contents of these notes can be combined in any way that is not contradictory.

[Note 1]

Some or all of the battery system shown in FIG. 1 can be mounted in another type of system or device. For example, a battery system 1 including a main control unit 11, battery unit 12, switching circuit 13, breaker unit 14 and storage unit 15 can be mounted in a mobile object operated using power discharged from the battery power module 21 (an electric vehicle, boat, aircraft, elevator, walking robot, etc.) or in an electronic device (personal computer, mobile phone, etc.), or can be incorporated into a power system for a household or production facility.

[Note 2]

The main control unit 11 can be configured of hardware, or a combination of hardware and software. The functions realized using software may be stored in a program, and the program executed by a program-executing device (such as a computer) to perform the functions.

[Note 3]

The following can also be considered. The battery system 1 in FIG. 1 may include a switching device, and the switching device may include the main control unit 11, the switching circuit 13, and the breaker unit 14. It may also include other configurational elements in the battery system 1. The switching circuit in the switching device of the present invention may be interposed between the battery unit and a power block outputting power or receiving a supply of power. In FIG. 1, the first electrical power block outputting power may combine an AC/DC converter 16 or AC/DC converter 16 and an alternating current power supply ACP, and the second electrical power block receiving a supply of power may combine a DC/AC inverter 17 to DC/AC inverter 17 and a load LD. Also, the charging switch 31 may be a first switch interposed between the first electrical power block and the battery module, and the discharging switch 32 may be a second switch interposed between the second electrical power block and the battery module.

Key to the Drawings

| | |
|---|---|
| 1: | Battery system |
| 11: | Main control unit |
| 12: | Battery unit |
| 13: | Switching circuit |
| 14: | Breaker unit |
| 21: | Battery module |
| 22: | Voltage detector |
| 23: | Current detector |
| 26: | Temperature measuring device |
| 27: | Battery anomaly detector |
| 28: | Remaining capacity calculating unit |
| 31: | Charging switch |
| 32: | Discharging switch |

**Claims**

1. A switching device including: a battery unit provided with a battery module having one or more secondary batteries; a switching circuit interposed between the battery module and an electrical power block outputting electrical power or receiving a supply of electrical power, and performing a switching operation to connect or disconnect the battery module and the electric power block; a breaker unit provided in series between the switching circuit and the battery module and/or between the switching circuit and the electric power block; and a control unit for controlling the switching operation of the switching circuit and the operation of the breaker unit;
the switching device **characterized in that** the control unit:

   classifies an anomaly as a first or second anomaly based on the type of anomaly when an anomaly occurs in the switching device or battery unit and the affected circuits are blocked by the breaker unit and, when the anomaly occurring is a second anomaly, establishes a grace period corresponding to the remaining capacity or output voltage of the battery module, and has the breaker unit maintain a connection between the affected circuits during the grace period.

2. The switching device according to claim 1, wherein the control unit, when the occurring anomaly is a second anomaly, sets the length of time of the grace period on the basis of the difference between the remaining capacity and a predetermined reference capacity on a timing referencing the timing at which the second anomaly occurred, or on the basis of the difference between the output voltage and a predetermined reference voltage on a timing referencing the timing at which the second anomaly occurred.

3. The switching device according to claim 2, wherein the control unit, when the occurring anomaly is a second anomaly, adjusts the length of time of the grace period on the basis of any increase or decrease in the difference in capacity or difference in voltage.

4. The switching device according to any one of claims 1 through 3, wherein the control unit, when the occurring anomaly is a second anomaly, has the breaker unit cut off the affected circuits if the anomaly has not disappeared when the grace period expires.

5. The switching device in any one of claims 1 through 4, wherein the control unit has the breaker unit cut off the affected circuits without establishing a grace period when the remaining capacity is outside of a predetermined capacity range on the timing referencing the timing at which the second anomaly occurred, or when the output voltage is outside of an output voltage range on the timing referencing the timing at which the second anomaly occurred.

6. The switching device in any one of claims 1 through 5, wherein the electric power block includes a first electric power block for outputting electric power and a second electric power block for receiving a supply of electric power, the switching circuit includes a first switch for performing a switching operation to connect or disconnect the first electrical power block and the battery module and a second switch for performing a switching operation to connect or disconnect the second electrical power block and the battery module, and the control unit controls the switching operations of the first and second switches.

7. The switching device according to claim 6, wherein the control unit, when the occurring anomaly is a second anomaly, outputs to the first and second switches an off command signal instructing the switches to cut off the first electric power block and the battery module and to cut off the second electric power block and the battery module during the grace period.

8. The switching device in any one of claims 1 through 7, wherein the control unit communicates with the battery unit and switching circuit, and a second anomaly includes a communication anomaly.

9. The switching device in any one of claims 1 through 8, wherein the control unit controls the switching state of the switching circuit by outputting a command signal to the switching circuit, and the second anomalies include a switching control anomaly.

10. The switching device in any one of claims 1 through 9, wherein the first anomalies include at least one of a group including overheating, overcharging, overdischarging and overcurrent in the battery module.

11. The switching device in any one of claims 1 through 10, wherein the control unit has the breaker unit cut off the affected circuits without establishing a grace period when the occurring anomaly is a first anomaly.

12. A breaker control method used in a switching device including: a battery unit provided with a battery module having one or more secondary batteries; a switching circuit interposed between the battery module and an electrical power block outputting electrical power or receiving a supply of electrical power, and performing a switching operation to connect or disconnect the battery module and the electric power block; a breaker unit provided in series between the switching circuit and the battery module and/or between the switching circuit and the electric power block; and a control unit for controlling the switching operation of the switching circuit and the operation of the breaker unit; the breaker control method **characterized in that** an anomaly is classified as a first or second anomaly based on the type of anomaly when an anomaly occurs in the switching device or battery unit and the affected circuits are blocked by the breaker unit and, when the anomaly occurring is a second anomaly, establishing a grace period corresponding to the remaining capacity or output voltage of the battery module, and having the breaker unit maintain a connection between the affected circuits during the grace period.

FIG. 1

Battery Module Anomaly $\begin{cases} \text{Overheating} \\ \text{Overcharge} \\ \text{Overdischarge} \\ \text{Overcurrent} \end{cases}$

FIG. 2

FIG. 3

Switching Circuit Anomaly $\begin{cases} \text{Switching Anomaly in Charging switch} \\ \text{Switching Anomaly in Discharging switch} \end{cases}$

FIG. 4

Battery System Anomaly $\begin{cases} \text{Battery Module} \\ \text{Anomaly} \end{cases} \begin{cases} \text{Overheating} \\ \text{Overcharge} \\ \text{Overdischarge} \\ \text{Overcurrent} \end{cases}$

Switching Circuit Anomaly $\begin{cases} \text{Switching Anomaly in Charging switch} \\ \text{Switching Anomaly in Discharging switch} \end{cases}$

Communication Anomaly $\begin{cases} \text{1st Signal Anomaly} \\ \text{2nd Signal Anomaly} \end{cases}$

FIG. 5

Noncriticalanomaly
occurs at timing $T_A$.

S11 | Turn off charge and
discharging switch.

S12 | Acquire remaining capacity
RC[TA'] at timing TA.

S13 $RC_{THA} \leqq RC[T_A'] \leqq RC_{THB}$ ? — N

Y

S14 | Set grace period with length
of time LT corresponding to
remaining capacity RC[TA'].

Y S15 Noncriticalanomaly eliminated?

N

S16 End of grace period? N

Y

S18
Return to normal
operation.

S17 | Turn off
breaker unit.

FIG. 6

FIG. 7

```
┌─────────────────────────────────┐
│     Noncriticalano|maly          │
│     occurs at timing T_A.        │
└─────────────────────────────────┘
                 │
                 ▼
┌─────────────────────────────────┐
S11  │  Turn off charge and       │
     │  discharging switch.       │
     └─────────────────────────────┘
                 │
                 ▼
┌─────────────────────────────────┐
S12a │  Acquire battery voltage   │
     │  V[TA'] at timing TA.      │
     └─────────────────────────────┘
                 │
                 ▼
S13a  <  V_THA ≦ V[T_A'] ≦ V_THB ? >────N
                 │ Y
                 ▼
┌─────────────────────────────────┐
S14a │  Set grace period with     │
     │  length of time LT         │
     │  corresponding to battery  │
     │  voltage V[TA'].           │
     └─────────────────────────────┘
                 │
                 ▼
  Y   S15  < Noncriticalanomaly eliminated? >
                 │ N
                 ▼
      S16  < End of grace period? >────N
                 │ Y
```

S18  Return to normal operation.

S17  Turn off breaker unit.

FIG. 8

$$LT$$

FIG. 9

1st Grace Period    2nd Grace Period

$T_A$      $T_B$      Time

FIG. 10

FIG. 11

**911**

Main control
unit

**915**     **913**     **916**

Power
supply

Switching
circuit

Load

**914** Breaker unit

**912**

**921**

FIG. 12

## INTERNATIONAL SEARCH REPORT

| International application No. |
| --- |
| PCT/JP2012/071948 |

**A. CLASSIFICATION OF SUBJECT MATTER**
*H02H7/18*(2006.01)i, *H01M10/44*(2006.01)i, *H02J7/00*(2006.01)i, *H02J7/04* (2006.01)i

According to International Patent Classification (IPC) or to both national classification and IPC

**B. FIELDS SEARCHED**

Minimum documentation searched (classification system followed by classification symbols)
H02H7/18, H01M10/44, H02J7/00, H02J7/04

Documentation searched other than minimum documentation to the extent that such documents are included in the fields searched
| | | | |
| --- | --- | --- | --- |
| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2009-201189 A (Toyota Motor Corp.), 03 September 2009 (03.09.2009), entire text; all drawings (Family: none) | 1-12 |
| A | JP 2010-178402 A (Sharp Corp.), 12 August 2010 (12.08.2010), entire text; fig. 1, 2 & US 2010/0117602 A1 & EP 2211441 A2 & CN 101789585 A | 1-12 |

| ☐ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 24 September, 2012 (24.09.12) | 02 October, 2012 (02.10.12) |

| Name and mailing address of the ISA/ Japanese Patent Office | Authorized officer |
| --- | --- |
| Facsimile No. | Telephone No. |

Form PCT/ISA/210 (second sheet) (July 2009)

**EP 2 760 094 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2003111301 A